# EUROPÄISCHE PATENTSCHRIFT

(11) **EP 1 476 934 B1**
(45) Veröffentlichungstag und Bekanntmachung des Hinweises auf die Patenterteilung: **23.11.2005**
(21) Anmeldenummer: 03706313.8
(22) Anmeldetag: 12.02.2003
(51) Int. Cl.: H02K 5/00, H02K 5/22

(54) **FIXIERUNGSEINHEIT FÜR EINEN ELEKTROMOTOR**
FIXING UNIT FOR AN ELECTRIC MOTOR
UNITE DE FIXATION DESTINEE A UN MOTEUR ELECTRIQUE

(30) Priorität: 18.02.2002 DE 10206692
(43) Veröffentlichungstag der Anmeldung: 17.11.2004
(73) Patentinhaber: SIEMENS AKTIENGESELLSCHAFT, 80333 München (DE)
(72) Erfinder: RENNEN, Michael, 65812 Bad Soden (DE); ANSCHICKS, Rolf, 35510 Butzbach (DE)
(86) Internationale Anmeldenummer: PCT/DE2003/000411
(87) Internationale Veröffentlichungsnummer: WO 2003/071661

(56) Entgegenhaltungen:
- EP-A- 0 215 299
- EP-A- 0 359 603
- EP-A- 0 688 087
- DE-A- 4 440 942
- US-A- 5 089 735
- US-A- 5 528 093
- US-A1- 2001 017 495

## Beschreibung

Die Erfindung bezieht sich auf eine Fixierungseinheit für einen Elektromotor, die aus einem mehrteiligen, elektrisch leitenden Grundkörper besteht, der Anschlüsse für die Stromversorgung des mehrteiligen, elektrisch leitenden Grundkörpers und weitere Anschlüsse für den Elektromotor aufweist und der in einem elektrisch nicht leitenden Träger angeordnet ist, der mindestens zwei Fixierlöcher aufweist, bei der der mehrteilige, elektrisch leitende Grundkörper und der elektrisch nicht leitende Träger eine gemeinsame Aussparung aufweisen.

Vorrichtungen zur Fixierung von Elektromotoren sind bekannt. Sie bestehen in der Regel aus zwei direkt nebeneinander angeordneten Körpern, die meistens plattenförmig gestaltet sind. Der eine Körper übernimmt dabei die Funktion der Befestigung und Orientierung des Elektromotors an einem Gehäuse. Der andere Körper ist mit den elektrischen Anschlüssen versehen, die die Stromversorgung des Elektromotors sicherstellen. Die bekannten Vorrichtungen zur Fixierung und Orientierung von Elektromotoren haben dabei den Nachteil, dass sie ein relativ großes Volumen als Bauraum benötigen. Darüber hinaus ist die Montage relativ aufwändig, da beide Grundkörper in spezieller Art und Weise zueinander positioniert werden müssen.

Eine Fixierungseinheit der eingangs beschriebenen Art ist aus der EP 0 215 299 bekannt. Bei dieser Lösung sind keine Spulen zur Entstörung beschrieben, d. h. diese müssen motorinnenseitig vorgesehen sein und benötigen dort Bauraum oder sie müssen separat montiert werden.

Ausgehend hiervon liegt der Erfindung die Aufgabe zugrunde, eine Vorrichtung zur Fixierung für einen Elektromotor mit Entstörspulen zu schaffen, die einfacher zu montieren ist.

Die der Erfindung zugrunde liegende Aufgabe wird durch eine Fixierungseinheit für einen Elektromotor der eingangs beschriebenen Art gelöst; bei welcher an der Fixierungseinheit zwei Spulen angeordnet sind.

Die Fixierungseinheit eignet sich zur Fixierung von Elektromotoren jedweden Typs, beispielsweise zur Fixierung eines DC-Elektromotors. Der mehrteilige, elektrisch leitende Grundkörper besteht mindestens aus zwei Teilen. Er ist in einem elektrisch nicht leitenden Träger angeordnet, wobei dieser den mehrteiligen, elektrisch leitenden Grundkörper nahezu vollständig umgibt, wobei dadurch eine Fixierungseinheit geschaffen wird. Der elektrisch nicht leitende Träger weist mindestens zwei Fixierlöcher auf, die nicht zwingend kreisförmig gestaltet sein müssen. Eine kreisförmige Lochform mit einem Durchmesser > 2 mm wird jedoch bevorzugt realisiert. In der Regel reichen zwei Fixierlöcher aus. Sie dienen ausschließlich der Befestigung der Fixierungseinheit an einem Gehäuse oder einer Halterung. Bei der gemeinsamen Aussparung handelt es sich ebenfalls um eine Art Loch in der Fixierungseinheit, in welcher das Lagerschild des Elektromotors angeordnet wird.

Erfindungsgemäß sind im mehrteiligen, elektrisch leitenden Grundkörper zwei Spulen angeordnet. Jede Spule ist dabei mindestens in einem Teil des mehrteiligen, elektrisch leitenden Grundkörpers angeordnet und wird bei Beaufschlagung mit elektrischem Strom vom elektrischen Strom durchflossen. Auf diese Weise kann die Fixierungseinheit ohne Mehraufwand bei der Montage zur Entstörung dienen und damit die elektromagnetische Verträglichkeit verbessern. Dabei ist es möglich, dass die Spulen aus dem elektrisch nicht leitenden Träger herausragen. Dies erfolgt nach den Wünschen des Kunden.

Es hat sich in überraschender Weise gezeigt, dass die Zusammenfassung des mehrteiligen, elektrisch leitenden Grundkörpers mit dem elektrisch nicht leitenden Träger zu einer Einheit zu einer Einsparung von Bauraum führt, so dass sowohl die Stromversorgung als auch die Befestigung bzw. Fixierung des Elektromotors an einem Gehäuse durch eine aus Einzelteilen gefertigte Einheit auf relativ einfache Weise realisiert werden kann.

Eine bevorzugte Ausgestaltung der Erfindung besteht darin, dass der mehrteilige, elektrisch leitende Grundkörper aus mindestens zwei Blechstücken besteht. Als Blechstücke eignen sich dabei Blechstreifen mit einer Dicke von 0,1 bis 2 mm. Die Blechstücke lassen sich in besonders einfacher Weise in den elektrisch nicht leitenden Träger einarbeiten, was die Herstellung der Fixierungseinheit vereinfacht.

Gemäß einer weiteren bevorzugten Ausgestaltung der Erfindung besteht der elektrisch nicht leitende Träger aus Kunststoff. Dabei ist vorteilhaft, dass der elektrisch nicht leitende Träger bei der Herstellung der Fixierungseinheit um den mehrteiligen, elektrisch leitenden Grundkörper im Rahmen eines Spritzverfahrens eingebunden werden kann, was die Herstellung der Fixierungseinheit ebenfalls erleichtert.

Nach einer weiteren bevorzugten Ausgestaltung der Erfindung verlaufen die Fixierlöcher mindestens teilweise durch den mehrteiligen, elektrisch leitenden Grundkörper. Das heißt, ein oder mehrere Fixierlöcher verlaufen auch durch den mehrteiligen; elektrisch leitenden Grundkörper. Dabei ist vorteilhaft, dass die Befestigung des Elektromotors an einem Gehäuse oder einer Halterung über die Fixierlöcher stabiler ausgestaltet werden kann, sofern der mehrteilige, elektrisch leitende Grundkörper in die Befestigung mit eingebunden ist.

Gemäß einer weiteren bevorzugten Ausgestaltung der Erfindung ist die gemeinsame Aussparung mittig angeordnet. Dies erleichtert die Anordnung des Elektromotors in der Fixierungseinheit und führt gleichzeitig zu einer gleichmäßigen Belastung der Verbindungselemente, mit denen die Fixierungseinheit über die Fixierlöcher an Gehäuseteilen befestigt wird.

Nach einer weiteren Ausgestaltung der Erfindung sind die weiteren Anschlüsse für den Elektromotor näher an der gemeinsamen Aussparung angeordnet als die Anschlüsse für die Stromversorgung des mehrteiligen, elektrisch leitenden Grundkörpers. Dadurch lässt sich die Stromversorgung des Elektromotors relativ einfach gestalten.

Gemäß einer weiteren bevorzugten Ausgestaltung der Erfindung ist an einer Seite des elektrisch nicht leitenden Trägers ein Kunststoffring angeordnet. Dieser Kunststoffring dient in vorteilhafter Weise einer zusätzlichen Außenfixierung des Elektromotors mit der Fixierungseinheit. Die Fixierung des Elektromotors durch die gemeinsame Aussparung wird dadurch verstärkt.

Nach einer weiteren Ausgestaltung der Erfindung weist der Kunststoffring an seiner der gemeinsamen Aussparung abgewandten Breitseite Ausbuchtungen auf. Diese Ausbuchtungen, die in der Regel nahezu halbkreisförmig gestaltet sind, verstärken die Fixierung des Elektromotors am Kunststoffring zusätzlich in besonders vorteilhafter Weise, wobei gleichzeitig eine Orientierung oder eine koaxiale Positionierung erreicht werden kann.

Eine weitere bevorzugte Ausgestaltung der Erfindung besteht darin, dass die Anschlüsse für die Stromversorgung des mehrteiligen, elektrisch leitenden Grundkörpers oder die weiteren Anschlüsse für den Elektromotor als Klemmanschlüsse gestaltet sind. Somit können lediglich die Anschlüsse für die Stromversorgung des mehrteiligen, elektrisch leitenden Grundkörpers oder lediglich die weiteren Anschlüsse für den Elektromotor oder beide Arten von Anschlüssen als Klemmanschlüsse gestaltet sein. Dabei ist vorteilhaft, dass die elektrische Kontaktierung relativ schnell erfolgen kann, was die Anordnung der Fixierungseinheit in Bauteilen erleichtert.

Nach einer weiteren bevorzugten Ausgestaltung der Erfindung ist am elektrisch nicht leitenden Träger mindestens ein Vorsprung angeordnet. Die Anordnung dieses Vorsprungs kann dabei je nach Kundenwunsch an verschiedenen Stellen des elektrisch nicht leitenden Trägers erfolgen. Je nach der Bauart des Gehäuses, in welchem die Fixierungseinheit positioniert werden soll bzw. je nach Bauart des Elektromotors, der durch die Fixierungseinheit fixiert werden soll, wird dieser Vorsprung entsprechend stegartig ausgeführt, was ebenfalls zu einer Verbesserung der Fixierung führt.

Gegenstand der Erfindung ist schließlich die Verwendung der Fixierungseinheit zur Fixierung eines Elektromotors in einem Drosselklappenstutzen. Die Anordnung der Fixierungseinheit in einem Drosselklappenstutzen ist besonders vorteilhaft, da im Drosselklappenstutzen in der Regel wenig Bauraum zur Verfügung steht, was zunächst zu Problemen bei der Fixierung des Elektromotors zur Betätigung der Drosselklappe führt. Bei der Anordnung der Fixierungseinheit in einem Drosselklappenstutzen lassen sich diese Probleme weitgehend in vorteilhafter Weise vermeiden.

Die Erfindung wird nachfolgend anhand der Zeichnung (Fig. 1 bis Fig. 6) näher und beispielhaft erläutert.
- Fig. 1: zeigt die Fixierungseinheit in der Vorder- und in der Seitenansicht.
- Fig. 2: zeigt die Fixierungseinheit im Schnitt A - A gemäß Fig. 1.
- Fig. 3: zeigt die Vorderansicht eines mehrteiligen, elektrisch leitenden Grundkörpers.
- Fig. 4: zeigt die Vorderansicht der Fixierungseinheit mit dem elektrisch nicht leitenden Träger.
- Fig. 5: zeigt die Fixierungseinheit am Elektromotor in dreidimensionaler Darstellung.
- Fig. 6: zeigt die in einem Drosselklappenstutzen angeordnete Fixierungseinheit.

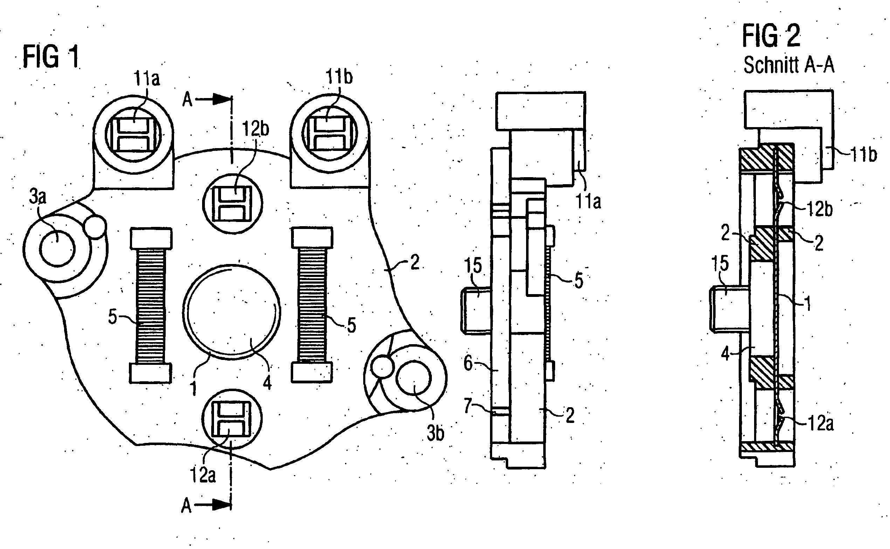

In Fig. 1 ist eine Fixierungseinheit für einen Elektromotor dargestellt, die aus einem mehrteiligen, elektrisch leitenden Grundkörper 1 besteht, der Anschlüsse 11a, 11b für die Stromversorgung des elektrisch leitenden Grundkörpers 1 und weitere Anschlüsse 12a, 12b für den Elektromotor aufweist und der in einem elektrisch nicht leitenden Träger 2 angeordnet ist, der Fixierlöcher 3a, 3b aufweist, bei der der mehrteilige, elektrisch leitende Grundkörper 1 und der elektrisch nicht leitende Träger 2 eine gemeinsame Aussparung 4 aufweisen jeweils in der Vorder-und in der Seitenansicht. Die Fixierlöcher 3a, 3b dienen ausschließlich der Befestigung der Fixierungseinheit an einem Gehäuse mittels handelsüblicher Befestigungselemente. In der gemeinsamen Aussparung 4, die mittig gestaltet ist, steht der mehrteilige, elektrisch leitende Grundkörper 1 etwas über, was durch den Stanzvorgang bedingt ist. In besonders vorteilhafter Weise wird der elektrisch nicht leitende Träger 2 aus Kunststoff gefertigt. Im mehrteiligen, elektrisch leitenden Grundkörper 1 sind zwei Spulen 5 angeordnet, die über den elektrisch nicht leitenden Träger 2 herausragen und somit aus der Fixierungseinheit überstehen. Sie dienen der Verbesserung der elektromagnetischen Verträglichkeit, wirken somit als Drosseln. Die weiteren Anschlüsse 12a, 12b für den Elektromotor liegen näher an.der gemeinsamen Aussparung 4 als diejenigen Anschlüsse 11a, 11b für die Stromversorgung des mehrteiligen, elektrisch leitenden Grundkörpers 1. An der einen Seite des elektrisch nicht leitenden Trägers 2 ist ein Kunststoffring 6 angeordnet. An seiner der gemeinsamen Aussparung 4 abgewandten Breitseite weist der Kunststoffring 6 Ausbuchtungen 7 auf, die in der Regel halbkreisförmig gestaltet sind und die die zusätzliche Fixierung des Elektromotors am Kunststoffring 6 verstärken. Die Anschlüsse 11a, 11b für die Stromversorgung des mehrteiligen, elektrisch leitenden Grundkörpers 1 oder die weiteren Anschlüsse 12a, 12b für den Elektromotor sind als Klemmanschlüsse gestaltet, die den Kontakt gewährleisten. Am elektrisch nicht leitenden Träger 2 ist ein Vorsprung 15 angeordnet, der der Verbesserung der Fixierung des Elektromotors dient. Seine Positionierung ist abhängig von der konstruktiven Gestaltung des Elektromotors bzw. von der konstruktiven Gestaltung des Gehäuses und ist in der Regel zusätzlich noch abhängig von den jeweiligen Kundenwünschen.

In Fig. 2 ist die Fixierungseinheit im Schnitt A - A gemäß Fig. 1 dargestellt. Auf die Darstellung der Spule wurde dabei aus Gründen der besseren Übersicht verzichtet. Der mehrteilige, elektrisch leitende Grundkörper 1 besteht dabei aus mindestens zwei Blechstücken und ist fast vollständig von dem elektrisch nicht leitenden Träger 2 umgeben.

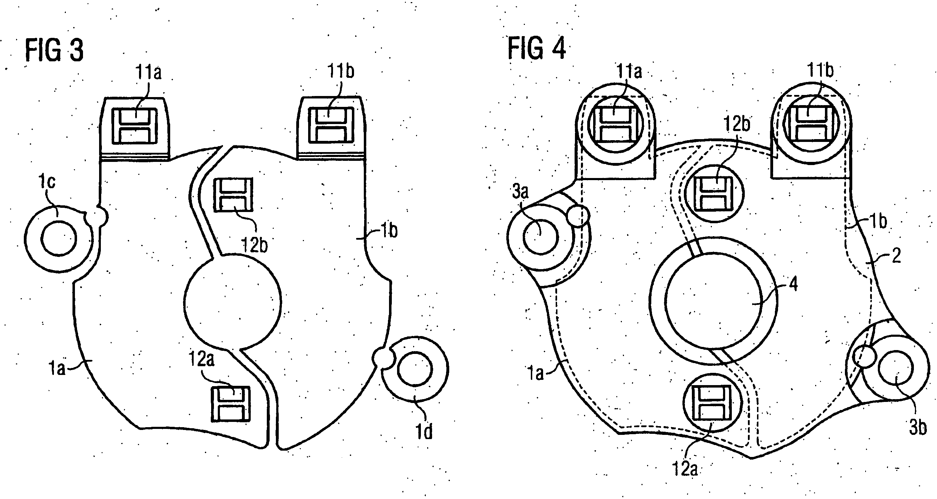

In Fig. 3 ist eine Ausführungsform des mehrteiligen, elektrisch leitenden Grundkörpers dargestellt, der aus vier Teilen 1a, 1b, 1c, 1d besteht. Auf die Darstellung der Spulen zur Erhöhung der elektromagnetischen Verträglichkeit ist auch hier aus Übersichtlichkeitsgründen verzichtet worden. Der elektrische Strom fließt über den Anschluss 11a für die Stromversorgung des mehrteiligen, elektrisch leitenden Grundkörpers zum weiteren Anschluss 12a für den Elektromotor und wird über den weiteren Anschluss 12b für den Elektromotor sowie über den Anschluss 11b für die Stromversorgung des mehrteiligen, elektrisch leitenden Grundkörpers wieder aus dem System abgeführt. Die Teile 1c und 1d sind um die Fixierlöcher des elektrisch nicht leitenden Trägers angeordnet (nicht dargestellt) und verbessern somit die Fixierung mit den Befestigungsmitteln in den Fixierlöcher.

In Fig. 4 ist die Fixierungseinheit mit dem elektrisch nicht leitenden Träger 2 dargestellt, in den der mehrteilige, elektrisch leitende Grundkörper gemäß Fig. 3 eingearbeitet ist. Der mehrteilige, elektrisch leitende Grundkörper ist dabei gestrichelt dargestellt. Die weiteren Anschlüsse 12a, 12b für den Elektromotor sind vereinfacht dargestellt.

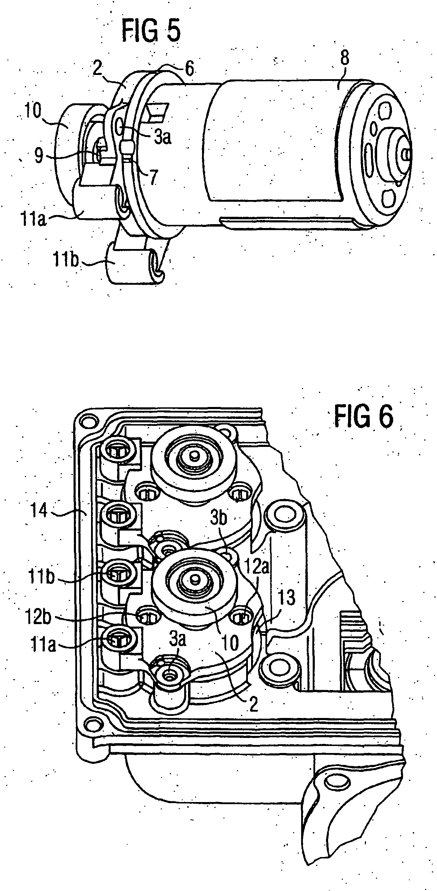

In Fig. 5 ist die Fixierungseinheit am Elektromotor 8-dreidimensional dargestellt. Auf der Motorwelle des Elektromotors 8 ist das Ritzel 9 sowie ein Magnetrad 10 angeordnet, das mit der elektronischen Steuerung des Elektromotors 8 in Verbindung steht (nicht dargestellt). Die Kombination aus Fixierungseinheit und Elektromotor 8 wird mit Hilfe des Fixierloches 3a an dem vorgesehenen Gehäuse befestigt (ebenfalls nicht dargestellt).

In Fig. 6 ist die Fixierungseinheit in eingebautem Zustand in einem Drosselklappenstutzen dargestellt. Über die Fixierlöcher 3a, 3b wird die Fixierungseinheit am Gehäuse 14 des Drosselklappenstutzens fixiert. Der.Elektromotor (nicht dargestellt) ist im Motorschacht 13 angeordnet. Dabei ist es möglich, mehrere Fixierungseinheiten nebeneinander anzuordnen, wenn mehrere Drosselklappen bewegt werden müssen, wie das in Fig. 6 dargestellt ist.

## Patentansprüche

1. Fixierungseinheit für einen Elektromotor (8), die aus einem mehrteiligen, elektrisch leitenden Grundkörper (1) besteht, der Anschlüsse (11a, 11b) für die Stromversorgung des mehrteiligen, elektrisch leitenden, Grundkörpers (1) und weitere Anschlüsse (12a, 12b) für den Elektromotor (8) aufweist und der in einem elektrisch nicht leitenden Träger (2) angeordnet ist, der mindestens zwei Fixierlöcher (3a, 3b) aufweist, bei der der mehrteilige, elektrisch leitende Grundkörper (1) und der elektrisch nicht leitende Träger (2) eine gemeinsame Aussparung (4) aufweisen,
**dadurch gekennzeichnet, dass** an der Fixierungseinheit zwei Spulen (5) angeordnet sind.

2. Fixierungseinheit nach Anspruch 1, bei der der mehrteilige, elektrisch leitende Grundkörper (1) aus mindestens zwei Blechstücken (1a, 1b) besteht.

3. Fixierungseinheit nach Anspruch 1 oder Anspruch 2, bei der der elektrisch nicht leitende Träger (2) aus Kunststoff besteht.

4. Fixierungseinheit nach einem der Ansprüche 1 bis 3, bei der die Fixierlöcher (3a, 3b) mindestens teilweise durch den mehrteiligen, elektrisch leitenden Grundkörper (1) verlaufen.

5. Fixierungseinheit nach einem der Ansprüche 1 bis 4, bei der die gemeinsame Aussparung (4) mittig angeordnet ist.

6. Fixierungseinheit nach Anspruch 5, bei der die weiteren Anschlüsse (12a, 12b) für den Elektromotor (8) näher an der gemeinsamen Aussparung (4) angeordnet sind als die Anschlüsse (11a, 11b) für die Stromversorgung des elektrisch leitenden Grundkörpers (1).

7. Fixierungseinheit nach einem der Ansprüche 1 bis 6, bei der an einer Seite des elektrisch nicht leitenden Trägers (2) ein Kunststoffring (6) angeordnet ist.

8. Fixierungseinheit nach Anspruch 7, bei der der Kunststoffring (6) an seiner der gemeinsamen Aussparung (4) abgewandten Breitseite Ausbuchtungen (7) aufweist.

9. Fixierungseinheit nach einem der Ansprüche 1 bis 8, bei der die Anschlüsse (11a, 11b) für die Stromversorgung des mehrteiligen, elektrisch leitenden Grundkörpers (1) oder die weiteren Anschlüsse (12a, 12b) für den Elektromotor (8) als Klemmanschlüsse gestaltet sind.

10. Fixierungseinheit nach einem der Ansprüche 1 bis 9, bei der am elektrisch nicht leitenden Träger (2) mindestens ein Vorsprung (15) angeordnet ist.

11. Verwendung der Fixierungseinheit nach einem der Ansprüche 1 bis 10 zur Fixierung eines Elektromotors (8) in einem Drosselklappenstutzen (14).

## Claims

1. Fixing unit for an electric motor (8) which comprises a multipart, electrically conductive basic body (1) which has connections (11a, 11b) for the power supply to the multipart, electrically conductive basic body (1) and further connections (12a, 12b) for the electric motor (8) and which is arranged in an electrically nonconductive support (2) which has at least two fixing holes (3a, 3b), in which unit the multipart, electrically conductive basic body (1) and the electrically nonconductive support (2) have a common recess (4), **characterized in that** two coils (5) are arranged on the fixing unit.

2. Fixing unit according to Claim 1, in which the multipart, electrically conductive basic body (1) comprises at least two sheet metal pieces (1a, 1b).

3. Fixing unit according to Claim 1 or Claim 2, in which the electrically nonconductive support (2) consists of plastic.

4. Fixing unit according to one of Claims 1 to 3, in which the fixing holes (3a, 3b) run at least partly through the multipart, electrically conductive basic body (1).

5. Fixing unit according to one of Claims 1 to 4, in which the common recess (4) is centrally arranged.

6. Fixing unit according to Claim 5, in which the further connections (12a, 12b) for the electric motor (8) are arranged closer to the common recess (4) than the connections (11a, 11b) for the power supply to the electrically conductive basic body (1).

7. Fixing unit according to one of Claims 1 to 6, in which a plastic ring (6) is arranged on one side of the electrically nonconductive support (2).

8. Fixing unit according to Claim 7, in which the plastic ring (6) has protuberances (7) on its broad side facing away from the common recess (4).

9. Fixing unit according to one of Claims 1 to 8, in which the connections (11a, 11b) for the power supply to the multipart, electrically conductive basic body (1) or the further connections (12a, 12b) for the electric motor (8) are made as clamping connections.

10. Fixing unit according to one of Claims 1 to 9, in which at least one projection (15) is arranged on the electrically nonconductive support (2).

11. Use of the fixing unit according to one of Claims 1 to 10 for fixing an electric motor (8) in a throttle valve body (14).

## Revendications

1. Unité de fixation destinée à un moteur électrique (8), laquelle se compose d'un ensemble (1) en plusieurs parties et conduisant l'électricité, qui comporte des raccordements (11a, 11b) pour l'alimentation en courant de l'ensemble (1) en plusieurs parties et conduisant l'électricité et d'autres raccordements (12a, 12b) pour le moteur électrique (8) et qui est monté dans un support (2) ne conduisant pas l'électricité, lequel comporte au moins deux trous de fixation (3a, 3b), dans laquelle l'ensemble (1) en plusieurs parties et conduisant l'électricité et le support (2) ne conduisant pas l'électricité ont un évidement commun (4),
**caractérisé par le fait que** deux bobines (5) sont disposées sur l'unité de fixation.

2. Unité de fixation selon la revendication 1 dans laquelle l'ensemble (1) en plusieurs parties et conduisant l'électricité se compose d'au moins deux pièces en tôle (1a, 1b).

3. Unité de fixation selon la revendication 1 ou la revendication 2 dans laquelle le support (2) ne conduisant pas l'électricité est en matière plastique.

4. Unité de fixation selon l'une des revendications 1 à 3 dans laquelle les trous de fixation (3a, 3b) s'étendent au moins partiellement à travers l'ensemble (1) en plusieurs parties et conduisant l'électricité.

5. Unité de fixation selon l'une des revendications 1 à 4 dans laquelle l'évidement commun (4) est disposé au milieu.

6. Unité de fixation selon la revendication 5 dans laquelle les autres raccordements (12a, 12b) pour le moteur électrique (8) sont plus près de l'évidement commun (4) que les raccordements (11a, 11b) pour l'alimentation en courant de l'ensemble (1) en plusieurs parties et conduisant l'électricité.

7. Unité de fixation selon l'une des revendications 1 à 6 dans laquelle une bague en matière plastique (6) est placée sur un côté du support (2) ne conduisant pas l'électricité.

8. Unité de fixation selon la revendication 7 dans laquelle la bague en matière plastique (6) a des renflements (7) sur son côté large opposé à l'évidement commun (4).

9. Unité de fixation selon l'une des revendications 1 à 8 dans laquelle les raccordements (11a, 11b) pour l'alimentation en courant de l'ensemble (1) en plusieurs parties et conduisant l'électricité ou les autres raccordements (12a, 12b) pour le moteur électrique (8) sont des bornes à serrage.

10. Unité de fixation selon l'une des revendications 1 à 9 dans laquelle au moins une avancée (15) est disposée sur le support (2) ne conduisant pas l'électricité.

11. Utilisation de l'unité de fixation selon l'une des revendications 1 à 10 destinée à la fixation d'un moteur électrique (8) dans une tubulure (14) à papillon de régulation des gaz.
